(19) Europäisches Patentamt
European Patent Office
Office européen des brevets

(11) Veröffentlichungsnummer : **0 035 666**
**B1**

(12) # EUROPÄISCHE PATENTSCHRIFT

(45) Veröffentlichungstag der Patentschrift : **02.05.84**

(51) Int. Cl.³ : **C 08 G 18/60**, C 08 G 18/28, C 09 D 3/66, C 09 D 5/06

(21) Anmeldenummer : **81101061.0**

(22) Anmeldetag : **16.02.81**

(54) **Verfahren zur Herstellung von Zumischharzen zur Thixotropierung von langöligen Alkydharzen.**

(30) Priorität : **27.02.80 AT 1064/80**

(43) Veröffentlichungstag der Anmeldung : **16.09.81 Patentblatt 81/37**

(45) Bekanntmachung des Hinweises auf die Patenterteilung : **02.05.84 Patentblatt 84/18**

(84) Benannte Vertragsstaaten : **BE CH DE FR GB LI NL**

(56) Entgegenhaltungen :
**FR-A- 2 282 437**
**US-A- 2 663 649**
**US-A- 2 966 472**

(73) Patentinhaber : **Vianova Kunstharz Aktiengesellschaft**
**A-8402 Werndorf (AT)**

(72) Erfinder : **Zückert, Bertram, Dr.**
**Krottendorferstrasse 90/19**
**A-8052 Graz (AT)**

(74) Vertreter : **Pitter, Robert, Dr. et al**
**Vianova Kunstharz Aktiengesellschaft Postfach 191**
**A-8011 Graz (AT)**

**EP 0 035 666 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Verfahren zur Herstellung von Zumischharzen zur Thixotropierung von langöligen Alkydharzen

Aufgabe der Erfindung ist die Herstellung von polyamid- und urethanmodifizierten Alkydharzen, welche als thixotropierende Zumischharze bei der Formulierung von Malerlacken Verwendung finden können.

Wie bekannt ist eine Thixotropierung vor allem bei Überzugsmitteln, welche durch Streichen appliziert werden, vorteilhaft, da dadurch das Abtropfen der Farbe vom Pinsel und das Abrinnen beim Auftrag höherer Schichtstärken an senkrechten Flächen verhindert wind. Überdies erfolgt in thixotropierten Anstrichmitteln keine Sedimentation oder Flokkulation der Pigmente.

Aus den DE-PSen 11 92 768 und 11 98 556 sowie der US-PS 2,663,649 ist es bekannt, Alkydharzen mit Hilfe von Dimerfettsäurepolyamidharzen entweder durch Zumischen oder durch Reaktion bei erhöhter Temperatur thixotrope Eigenschaften zu verleihen.

Gemäß AT-PS 343 913 werden niedermolekulare OH-gruppenreiche Alkydharzvorprodukte auf Basis trocknender Fettsäuren gemeinsam mit Hydroxylgruppen enthaltenden fettsäuremodifizierten Polyamiden mit Diisocyanaten umgesetzt. Gegenüber den in der obengenannten Weise thixotropierten Alkydharzen zeigen die zuletzt genannten urethanmodifizierten Alkydharze nicht nur höhere Thixotropie, sondern sie verleihen den Lacken auch verbesserte Trocknungsgeschwindigkeit und Filmhärte. Mit solchen Urethanalkyden thixotropierte Malerlacke sind überdies weniger wärmeempfindlich und daher auch für südliche Länder geeignet. Die üblichen thixotropen Alkydharze verlieren bereits oberhalb von 40 °C ihren Gelcharakter. Solche Temperaturen werden unter ungünstigen Bedingungen (z. B. in sonnenexponierten Schaufenstern) schon in gemäßigten Breiten erreicht und führen zu dem bekannten « show-window-effect », d. h. zum Absetzen des Pigmentes und Aufschwimmen einer Klarlackschicht.

Eine wesentliche Schwierigkeit bei der Kombination der thixotropierenden Urethanalkydharze mit den in Malerlacken eingesetzten Langölalkyden besteht in bezug auf die Verträglichkeit der Komponenten, was sich in schlechter Pigmentierung, Oberflächenstörungen und geringem Glanz der Lackfilme äußert. Diese Schwierigkeiten treten noch verstärkt bei Typen auf, bei welchen die wirksamen Faktoren (Polyamid- und Urethangruppengehalt bzw. Molekulargewicht der Komponente) möglichst hoch gehalten werden. Eine starke Modifikation ist aber aus preislichen Gründen notwendig, damit mit möglichst geringen Mengen der teuren Thixotropierharze ein optimaler Effekt erzielt werden kann.

Es besteht somit ein Bedarf an verbesserten thixotropen urethanmodifizierten Alkydharzen, welche zur Modifizierung von Malerlacken geeignet sind und starke Thixotropie und rasche Trocknung mit möglichst umfassender Verträglichkeit mit langöligen Alkydharzen verbinden. Außerdem sollte das Herstellungsverfahren im Interesse der Preiswürdigkeit der Produkte möglichst einfach sein.

Die gestellte Aufgabe konnte durch den Einbau von tertiären Aminogruppen in das zur Thixotropierung herangezogene Zumischharz gelöst werden. Dieses Ergebnis war umso überraschender, als in der Literatur nur nachteilige Effekte bei thixotropen Kunstharzen bei Anwesenheit von Aminen beschrieben werden.

Die vorliegende Erfindung betrifft daher ein Verfahren zur Herstellung von polyamid- und urethanmodifizierten Alkydharzen, welches dadurch gekennzeichnet ist, daß man bei 180-240 °C

57-79,5 Gew.-% eines niedermolekularen Alkydharzvorproduktes, welches einen Anteil an trocknenden Fettsäuren von 55-75 Gew.-%, ein Molverhältnis zwischen Polyol und Dicarbonsäure von über 1,8 : 1, eine Hydroxylzahl von 100-240 mg KOH/g, eine Säurezahl von weniger als 2 mg KOH/g und ein Molekulargewicht (im Zahlenmittel) zwischen ca. 800 und ca. 2 000 aufweist mit

10-20 Gew.-% eines Dimerfettsäurepolyamids umsetzt und das erhaltene Zwischenprodukt bei 80-120 °C in Gegenwart indifferenter Lösungsmittel mit

10-20 Gew.-% eines oder mehrerer Diisocyanate und

0,5-3,0 Gew.-% eines Amins der allgemeinen Formel

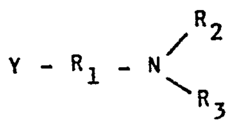

reagiert,

wobei Y für eine Hydroxyl- oder eine primäre oder sekundäre Aminogruppe steht, $R_1$ einen Alkylenrest mit 2-5 C-Atomen und $R_2$ sowie $R_3$ einen Alkylrest mit 1-4 C-Atomen bedeutet, wobei die Menge des Amins so gewählt wird, daß für das Reaktionsprodukt eine Aminzahl zwischen 3 und 15 mg KOH/g resultiert und mit Maßgabe, daß vor der Zugabe des Amins mindestens 40 % der Isocyanatgruppen reagiert wurden, aber noch ein ausreichender Überschuß für die Reaktion mit den NH-Gruppen vorhanden ist.

Die für die Herstellung der Alkydharzvorprodukte geeigneten Rohstoffe und Herstellungsverfahren sind in der Literatur für die Herstellung von oxidativ filmbildenden Alkydharzen bekannt und werden z. B. im Buch von D.H. SOLOMON, The Chemistry of Organic Film Formers, John Wiley + Sons, Inc. beschrieben.

Die erfindungsgemäß eingesetzten Alkydharzvorprodukte sind niedermolekulare Produkte, die einen Anteil an trocknenden Fettsäuren von 55-75 Gew.-% sowie ein Polyol-Dicarbonsäure-Molverhältnis von über 1,8 : 1 aufweisen. Es resultieren dabei Molekulargewichte mit einem Zahlenmittel im Bereich zwischen ca. 800 und ca. 2 000. Die Produkte weisen Hydroxylzahlen zwischen 100-240 mg KOH/g auf. Die Säurezahl soll unter 2 mg KOH/g liegen.

Als Polyole können beispielsweise Glycerin, Trimethylolalkane, die verschiedenen Pentaerythrit-Typen sowie gegebenenfalls untergeordnete Mengen von Diolen eingesetzt werden.

Geeignete Fettsäuren sind z. B. die aus den trocknenden Ölen wie Leinöl, Sojaöl, Holzöl, dehydratisiertem Rizinusöl usw. gewonnenen Fettsäuregemische, Tallölfettsäuren, sowie Fettsäuren wie sie durch Fraktionierung, Isomierisierung und andere Umwandlungsverfahren aus den genannten Materialien gewonnen werden. Die Fettsäuren weisen im Durchschnitt Jodzahlen von über 110 auf. Ebenso können auch die entsprechenden Polyolester, wie sie z. B. in den natürlichen Ölen vorliegen, zum Einsatz kommen.

Als Dicarbonsäuren kommen die üblicherweise eingesetzten aromatischen Säuren wie die Phthalsäuren, sowie gegebenenfalls in untergeordneten Mengen aliphatische Dicarbonsäuren wie Adipinsäure zur Verwendung. Neben den Fettsäuren können gegebenenfalls auch andere Monocarbonsäuren, wie Benzoesäure, Alkylbenzoesäuren oder gesättigte aliphatische Monocarbonsäuren, wie Isononansäure, anteilig verwendet werden.

Die Dimerfettsäurepolyamide sind handelsübliche Produkte, welche beispielsweise durch Kondensation von dimerisierten Fettsäuren mit prim. Diaminen, wie Äthylendiamin hergestellt werden und von den Herstellerfirmen für die Herstellung von thixotropen Alkydharzen empfohlen werden. Diese Dimerfettsäurepolyamide weisen Molekulargewichte um 2 000-3 000, Säure- bzw. Aminzahlen unter 10 mg KOH/g, sowie Erweichungspunkte zwischen 100 und 130 °C auf. Beispiele sind z. B. in KARSTEN, Lackrohstoff-Tabellen, C.R. VINCENTZ Verlag Hannover, angeführt.

Als Diisocyanate kommen im Interesse von Trocknung und Filmhärte vor allem aromatische Diisocyanate, wie 4,4'-Diphenylmethandiisocyanat, 2,4-Toluylendiisocyanat oder 2,6-Toluylendiisocyanat in Betracht. Daneben können gegebenenfalls auch aliphatische Diisocyanate, wie 1,6-Hexamethylendiisocyanat bzw. cycloaliphatische Diisocyanate, wie Isophorondiisocyanat oder 4,4'-Dicyclohexylmethandiisocyanat eingesetzt werden. Vorzugsweise wird die handelsübliche Isomerenmischung aus 2,4- und 2,6-Toluylendiisocyanat verwendet.

Amine der allgemeinen Formel

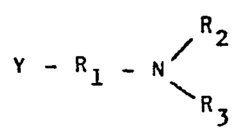

wobei Y eine Hydroxyl- oder eine primäre oder sekundäre Aminogruppe darstellt, $R_1$ einen Alkylenrest mit 2-5 C-Atomen und $R_2$ sowie $R_3$ einen Alkylrest mit 1-4 C-Atomen bedeutet sind tertiäre Alkanolamine, wie Dimethyläthanolamin, Diäthyläthanolamin, Dipropyläthanolamin etc. sowie prim. tert. oder sek. tert. Diamine, wie Dimethylaminoäthylamin, Dimethylamino-propylamin, Diäthylamino-propylamin oder N,N-Diäthyl-N'-Methylpropylendiamin.

Die Umsetzung der Alkydharzvorprodukte mit den Dimerfettsäurepolyamiden wird bei 180-240 °C, bevorzugt zwischen 210 und 230 °C vorgenommen. Die Herstellung erfolgt in der gleichen Weise, wie dies von der Herstellung thixotroper Alkydharze bekannt ist. Der Unterschied liegt im wesentlichen darin, daß die erfindungsgemäß erhaltenen Zwischenprodukte ein niedriges Molekulargewicht aufweisen. Die erforderliche Reaktionszeit ist abhängig von der Natur der Reaktionspartner und beträgt in der Regel 2-4 Stunden. Dabei erfolgt durch Veresterungs-, Amidierungs-, Umesterungs- und Umamidierungsreaktionen eine partielle Homogenisierung der ursprünglichen Alkyd-Polyamid-Mischung.

Diese Reaktion muß soweit geführt werden, daß nach Umsetzung mit dem Diisocyanat und dem tertiären Amin ein homogenes Endprodukt resultiert. Sie darf aber nicht wesentlich über diesen Punkt hinaus verlängert werden, weil dadurch eine Verminderung der Thixotropie hervorgerufen wird. Die Reaktion kann durch Prüfung der Verträglichkeit mit aromatenfreiem Benzin oder mit Benzin/Leinöl-Mischungen kontrolliert werden.

In vielen Fällen ist aber infolge des niedrigen Molekulargewichtes keine signifikante Änderung der Verträglichkeit feststellbar. In diesem Fall ist man auf die exakte Einhaltung von den in Vorversuchen ermittelten Versuchsbedingungen (Zeit und Temperatur) angewiesen.

Die Reaktion des polyamidmodifizierten Alkydharzvorproduktes mit dem Diisocyanat und dem Amin erfolgt in Lösung,gewöhnlich 50 %ig in Benzin. Bei Einsatz von aromatischen Diisocyanaten wird bei 80-100 °C, bei Verwendung aliphatischer Isocyanate bei 100-120 °C gearbeitet. Wegen der katalytischen Wirkung der tertiären Aminogruppen ist ein gesonderter Zusatz von Katalysatoren nicht erforderlich.

Die Amine werden bei dem Prozeß durch Reaktion ihrer OH-bzw. NH- oder $NH_2$-Gruppe in das Harz eigebaut, wobei die tertiäre Aminogruppe intakt bleibt. Im Lack bilden sich salzartige Bindungen zwischen den Aminogruppen des modifizierten Urethanalkydharzes und den Säuregruppen des langöligen Alkydharzes aus. Diese Bindungen verbessern einerseits die Homogenität der Mischung und leisten zudem noch einen Beitrag zur Thixotropie.

Die Wirkung läßt sich durch Vergleichsversuche klar demonstrieren : Ersetzt man z. B. in einem erfindungsgemäß hergestellten modifizierten Urethanalkydharz das Amin durch die äquivalente Menge Butanol, so bekommt man bei Kombination mit langöligen Alkydharzen trübe Mischungen mit wesentlich geringerer Thixotropie, welche Lacke mit nur geringem Glanz liefern. Steigert man dagegen die Aminmenge innerhalb der angegebenen Grenzen, so werden Thixotropie und Verträglichkeit mit Langölalkyden verbessert.

Da langölige Alkydharze in der Regel eine Säurezahl zwischen 6 und 10 besitzen und der Urethanalkydharzgehalt in Malerlacken weniger als 25 % des Gesamtbindemittels ausmacht, ergibt sich im Lack ein Überschuß an Carboxylgruppen. Aus diesem Grund beobachtet man auch keine negativen Nebenwirkungen der Aminogruppen.

Wesentlich für die Wirkung ist ein vollständiger Einbau der Amine in die Harzmoleküle. Das Zurückbleiben von ungebundenem Amin ist genau so schädlich, wie die Reaktion von einem Molekül Diisocyanat mit 2 Molekülen Amin. Während durch verbleibendes freies Amin die Thixotropie verschlechtert wird, beeinträchtigen Reaktionsprodukte aus einem Mol Diisocyanat mit 2 Mol Amin durch ihre Unverträglichkeit die Qualität der Produkte.

Aus diesem Grund muß der Zeitpunkt der Zugabe des Amins sorgfältig gewählt werden. Alkanolamine können vor Zugabe des Diisocyanates mit dem Alkydharzvorprodukt gemischt werden. Prim.-tert. und prim.-sek. Diamine dürfen dagegen erst nach ausreichender Vorreaktion des Alkydharzes mit dem Diisocyanat zugesetzt werden. Anderenfalls würden sich infolge der stark begünstigten Reaktion zwischen NH— und —N=C=O-Gruppen bevorzugt die unverträglichen Moleküle aus einem Molekül Diisocyanat und 2 Molekülen Amin bilden. Die Vorreaktion kann durch N=C=O-Bestimmungen kontrolliert werden. Bei Zugabe des Diamines müssen die N=C =O-Gruppen zu mindestens 40 % reagiert haben, es muß aber noch ein ausreichender Überschuß für die Reaktion mit den NH-Gruppen vorhanden sein.

Gemäß der Erfindung werden 57-79,5 Gew.-% des niedermolekularen Alkydharzvorproduktes mit 10-20 Gew.-% des Dimerfettsäurepolyamids reagiert. Das Zwischenprodukt wird anschließend in Gegenwart indifferenter Lösungsmittel mit 10-20 Gew.-% des Diisocyanats und 0,5-3 Gew.-% des Amins umgesetzt. Art und Menge des tertiären Amines werden innerhalb der angegebenen Grenzen so gewählt, daß eine Aminzahl zwischen 3 und 15 resultiert.

In den Lackformulierungen werden die erfindungsgemäß hergestellten polyamid- und urethanmodifizierten Alkydharze in Anteilen zwischen 5 und 25 Gew.-% bezogen auf das Gesamtbindemittel eingesetzt. Als Kombinationspartner werden die in den sogenannten Malerlacken, d. h. Lacken, die vorzugsweise mit dem Pinsel aufgetragen werden, üblicherweise verwendeten langöligen Alkydharze eingesetzt. Die mit Hilfe der erfindungsgemäß hergestellten Zumischharze erhaltenen Lacke zeichnen sich durch einen durch die besondere Verträglichekeit der Harzkomponenten erzielbaren Glanz aus. Die Stabilität der thixotropen Eigenschaften wird auch durch längere Lagerung bei erhöhter Temperatur kaum beeinflußt.

Folgende Beispiele sollen das erfindungsgemäße Verfahren erläutern :

1. Alkydharzvorprodukte und Polyamidmodifizierung

In Tabelle 1 sind die Zusammensetzung und die Kennzahlen der Alkydharzvorprodukte zusammengefaßt. Die Herstellung erfolgt in bekannter Weise durch Veresterung bei 200-220 °C mit Hilfe von Xylol als Schleppmittel bis zu einer Säurezahl von unter 2 mg KOH/g.

Das erhaltene Alkydharzvorprodukt wird mit dem Dimerfettsäurepolyamid entsprechend den in Tabelle 2 angegebenenen Bedingungen reagiert und anschließend bei 140 °C mit Testbenzin auf einen Festkörpergehalt von 70 Gew.-% verdünnt.

Als Dimerfettsäurepolyamide wurden handelsübliche Produkte eingesetzt :

Polyamid 1 : Handelsübliches, zur Thixotropierung von Alkydharzen empfohlenes Dimerfettsäurepolyamid ; Molekulargewicht unter 2 000 ; Säurezahl max. 7 mg KOH/g ; Aminzahl max. 7 mg KOH/g ; Spez. Gewicht 0,98 ; Erweichungspunkt 110-120 °C.

Polyamid 2 : Handelsübliches, zur Thixotropierung von Alkydharzen empfohlenes Dimerfettsäurepolyamid ; Molekulargewicht ca. 3 000 ; Säurezahl max. 6 mg KOH/g ; Aminzahl max. 6 mg KOH/g ; Erweichungspunkt 110-120 °C.

(Siehe Tabellen Seite 5 f.)

Tabelle 1

| | A 1 | A 2 |
|---|---|---|
| Tallölfettsäure | 500 | — |
| Sojafettsäure | — | 377 |
| Glycerin | 66 | 107 |
| Pentaerythrit | 107 | 47 |
| Phthalsäureanhydrid | 100 | 100 |
| Hydroxylzahl mg KOH/g | 165 | 201 |
| Fettsäuregehalt % | 68,5 | 63,5 |
| Polyol : Dicarbonsäure (Molverhältnis) | 2,2 : 1 | 2,2 : 1 |

Tabelle 2

| | Z 1 | Z 2 |
|---|---|---|
| A 1 | 523 | — |
| A 2 | — | 508 |
| Polyamid 1 | 120 | — |
| Polyamid 2 | — | 94 |
| Reaktionszeit (Minuten) bei | | |
| 230 °C | 105 | 120 |
| dann 220 °C | 60 | 60 |
| | Z 1 | Z 2 |
| Polyamidgehalt % | 18,7 | 16 % |
| Festkörpergehalt Gew.-% | 70 | 70 |

Beispiel 1

112 g Zwischenprodukt Z 1 werden aufgeschmolzen und mit 65 g Testbenzin und 1 g Dimethyläthanolamin bei 60 °C gut verrührt. Dann werden 16 g einer 80 : 20 Mischung aus 2,4 und 2,6-Toluylendiisocyanat (TDI) zugefügt und die Temperatur auf 100 °C gesteigert. Nach 7 Stunden ist die Reaktion abgeschlossen.

Die Kennzahlen der Harze sind in Tabelle 3 zusammengefaßt. In allen Fällen entstand ein klares und festes Gel.

Beispiel 2

112 g Zwischenprodukt Z 1 werden mit 57,5 g Testbenzin verdünnt und bei 60 °C mit 17,5 g TDI versetzt. Die Temperatur wird auf 80 °C erhöht und 60 Minuten auf diesem Wert gehalten. Eine N=C=O-Bestimmung ergibt, daß zu diesem Zeitpunkt 53,5 % der ursprünglich vorhandenen Isocyanatgruppen reagiert haben. Nun wird eine Mischung aus 2 g Dimethyläthanolamin und 10 g Testbenzin unter starkem Rühren langsam zugegeben. Anschließend wird die Temperatur auf 100 °C gesteigert. Nach 7 Stunden wird die Harzlösung abgekühlt und abgefüllt.

Beispiel 3

112 g Zwischenprodukt Z 1 werden mit 55 g Testbenzin auf 60 °C erhitzt. Dann wird 16 g TDI zugesetzt, die Temperatur auf 80 °C gesteigert und 60 Minuten auf diesem Wert gehalten. Anschließend wird eine Mischung aus 10 g Testbenzin und 1,46 g Diäthylaminopropylamin im Verlauf von 10 Minuten unter starkem Rühren zugegeben und die Temperatur weiter auf 100 °C gesteigert. Nach 7 Stunden wird die Heizquelle entfernt und das Harz abgefüllt.

Vergleichsbeispiel 1

Analog Beispiel 1 wird ein thixotropes Urethanharz hergestellt. Dabei wird jedoch das Dimethyläthanolamin durch die äquivalente Menge (0,83 g) an n-Butanol ersetzt. Wegen des Fehlens katalytisch wirksamer Aminogruppen wird die Reaktion um 3 Stunden verlängert.

Vergleichsbeispiel 2

Es wird ein thixotropes Urethanalkydharz analog Beispiel 1, jedoch ohne Zusatz von Dimethyläthanolamin hergestellt. Die Reaktionsdauer wird wie bei Vergleichsbeispiel 1 auf 10 Stunden ausgedehnt.

Beispiel 4

114 g Zwischenprodukt Z 2 und 54 g Testbenzin werden auf 60 °C erwärmt. Dann werden 16,75 g Toluylendiisocyanat zugefügt. Die Temperatur wird auf 80 °C gesteigert und 60 Minuten in diesem Bereich gehalten. Anschließend wird im Verlauf von 10 Minuten eine Mischung aus 1,31 g Diäthyläthanolamin und 10 g Testbenzin zugegeben und die Temperatur weiter auf 100 °C gesteigert. Nach 7 Stunden ist die Reaktion abgeschlossen.

Beispiel 5

Es wird ein thixotropes Urethanalkydharz entsprechend Beispiel 4 hergestellt, wobei jedoch das Diäthyläthanolamin durch die äquivalente Menge (1,14 g) Dimethylaminopropylamin ersetzt wird.

Beispiel 6

Analog Beispiel 5 wird ein thixotropes Urethanalkydharz hergestellt, wobei jedoch die Menge des Dimethylaminopropylamin verdoppelt wird (2,28 g). Um die Grenzviskositätszahl bzw. den Trockenrückstand auf dem gleichen Niveau zu halten, wird außerdem die Menge an TDI auf 18,75 g und die Gesamtmenge an Testbenzin auf 67 g erhöht.

Vergleichsbeispiel 3

Es wurde unter Ersatz von Diäthyläthanolamin durch die äquivalente Menge (0,83 g) n-Butanol ein thixotropes Urethanalkydharz analog Beispiel 4 hergestellt. Die Reaktisonsdauer wurde, um das Fehlen katalytisch wirksamer Aminogruppen zu kompensieren, auf 10 Stunden erhöht.

Tabelle 3

Kennzahlen der Harze gemäß Beispiel 1-6 und der Vergleichsbeispiele 1-3

| | FK (1) % | V (2) ml/g | PG (3) % | DI (4) % | AG (5) % | AZ (6) mg KOH/g |
|---|---|---|---|---|---|---|
| B 1 | 50,6 | 10,4 | 15,4 | 16,5 | 1,03 | 6,8 |
| B 2 | 50,3 | 10,2 | 15 | 17,6 | 2,01 | 13 |
| B 3 | 51 | 10,3 | 15,4 | 16,4 | 1,5 | 6,5 |
| V 1 | 49,8 | 9,9 | 15,4 | 16,5 | 0 | — |
| V 2 | 49,2 | 11,3 | 15,6 | 16,7 | 0 | — |
| B 4 | 50,5 | 9,8 | 13,1 | 17,1 | 1,34 | 6,3 |
| B 5 | 50,6 | 10,0 | 13,1 | 17,1 | 1,17 | 6,6 |
| B 6 | 51 | 10,3 | 12,7 | 18,7 | 2,26 | 13,3 |
| V 3 | 49,1 | 10,6 | 13,1 | 17,2 | 0 | — |

(1) Festkörpergehalt.
(2) Grenzviskositätszahl (Chloroform, 20 °C).
(3) Gehalt an Polyamid.
(4) Gehalt an Diisocyanat.
(5) Gehalt an Amin.
(6) Aminzahl.

Lacktechnische Prüfung der Harze

Die Harze gemäß Beispiel 1-6 und Vergleichsbeispiel 1-3 werden in Kombination mit langöligen Alkydharzen im Klarlack auf Verträglichkeit und Thixotropie und im Weißlack auf Lagerfähigkeit bei erhöhter Temperatur, Verlauf, Abrinnen, Trocknung und Glanz geprüft.

1. Prüfung auf Verträglichkeit

Um die Verbesserung der Verträglichkeit zu demonstrieren, werden die Harze mit einem extrem schlecht verträglichen, langöligen Sojaöl-Isophthalsäurealkydharz (Ölgehalt : ca. 75 %, Hydroxylzahl : unter 15) kombiniert. Die Zumischharze werden im Festharzverhältnis 1 : 4 mit dem Sojaöl-Isophthalsäureharz gemischt, bei 100 °C homogenisiert, mit Testbenzin auf 50 % Trockenrückstand verdünnt und in Eprouvetten (Durchmesser : 15 mm) abgefüllt. Die Proben werden vor der Messung 24 Stunden bei Raumtemperatur gelagert. Die Trübung der Mischungen wird durch relative Messung der Streulichtintensität gemessen. Die Messungen werden mit einem Nephelometer (« EEL-Nephelometer » von Evans Electroselenium LTD, Halstead, Essex, England) durchgeführt. Die Werte sind in Tabelle 4 zusammengefaßt.

Tabelle 4

| | B 1 | B 2 | B 3 | V 1 | V 2 | B 4 | B 5 | B 6 | V 3 |
|---|---|---|---|---|---|---|---|---|---|
| Nephelometerwert | 51 | 16 | 45 | 103 | 107 | 95 | 88 | 27 | 156 |

Erläuterung der Nephelometer-Meßwerte

| Meßwerte | subjektive Beurteilung der Proben |
|---|---|
| 0- 5 | optisch rein |
| 5- 25 | leichte Opaleszenz |
| 25- 50 | starke Opaleszenz |
| 50- 75 | schwache Trübung |
| 75-125 | starke Trübung |
| über 125 | Proben undurchsichtig |

2. Prüfung der Thixotropie

Zur Prüfung der Thixotropie werden die Zumischharze im Festharzverhältnis 1 : 4 mit einem typischen Bindemittel für Malerlacke kombiniert (Alkydharz auf Basis Sojaöl, Phthalsäureanhydrid und Pentaerythrit mit einem Ölgehalt von 64 % und einer Hydroxylzahl von 35). Die Mischungen werden mit Testebenzin auf 50 % Trockenrückstand verdünnt, bei 100 °C gut homogenisiert und unter starkem Rühren auf 20 °C gekühlt. Dann wird dem Brookfieldgerät RVF, Spindel 3 bei 10 Umdrehungen pro Minute der Viskositätsanstieg in Abhängigkeit von der Zeit gemessen. Das Rotationsviskosimeter bleibt während der gesamten Meßdauer eingeschaltet, der Aufbau der thixotropen Struktur erfolgt gegen viskositätsabbauenden Effekt der rotierenden Spindel. In Tabelle 5 sind die Ergebnisse zusammengefaßt.

Tabelle 5

Thixotropie : Viskositätszunahme in Abhängigkeit von der Zeit (Brookfield RVF, Sp. 3 10 U/min, 20 °C

| | | | Viskosität | (Pa.s) | | |
|---|---|---|---|---|---|---|
| nach | 1 | 5 | 10 | 20 | 30 min | Bemerkungen |
| B 1 | 1,9 | 3,4 | 3,8 | 4,3 | 4,8 | klar |
| B 2 | 1,6 | 2,6 | 3,2 | 5,0 | 6,3 | klar |
| B 3 | 2,1 | 2,6 | 3,1 | 3,4 | 4,2 | klar |
| V 1 | 0,7 | 1,0 | 1,1 | 1,2 | 1,3 | trüb |
| V 2 | 0,8 | 1,0 | 1,2 | 1,4 | 1,5 | trüb |
| B 4 | 0,7 | 1,3 | 1,7 | 1,9 | 2,1 | klar |
| B 5 | 0,8 | 1,4 | 1,8 | 2,0 | 2,2 | klar |
| B 6 | 1,0 | 1,5 | 2,0 | 2,7 | 3,2 | klar |
| V 3 | 0,4 | 0,5 | 0,6 | 0,6 | 0,7 | trüb |

3. Prüfung von pigmentierten Lacken

Zur Herstellung eines weißen, thixotropen Malerlackes werden die Zumischharze mit dem gleichen Alkydharz kombiniert, welches für die Prüfung der Thixotropie verwendet wurde. Das Mischungsverhältnis beträgt jedoch 1 : 9. Die Harzmischung wird im Verhältnis 1 : 0,8 mit Titandioxid pigmentiert und in üblicher Weise mit Kobalt-, Blei- und Kalziumnaphthenat sikkativiert. Zur Verhinderung der Hautbildung wird Methyläthylketonoxim zugesetzt. Die Lacke werden mit Testbenzin auf eine high-shear-Viskosität (10 000 $s^{-1}$) von 0,4 Pa.s eingestellt. Die Prüfdaten sind in Tabelle 6 zusammengefaßt.

Tabelle 6

| | Lagerfähigkeit | Trocknung | Verlauf | Ablaufneigung | Glanz |
|---|---|---|---|---|---|
| B 1 | i.O. | 4/16 | 2 | 2 | 78 |
| B 2 | i.O. | 4/15 | 2-3 | 1-2 | 85 |
| B 3 | i.O. | 3,5/18 | 2 | 2-3 | 80 |
| V 1 | a | 4/16 | 1-2 | 6-7 | 59 |
| V 2 | a | 3,5/16 | 2 | 7 | 55 |
| B 4 | i.O. | 3,5/17 | 2 | 3-4 | 75 |
| B 5 | i.O. | 4/15 | 1-2 | 3 | 77 |
| B 6 | i.O. | 3,5/15 | 2 | 2-3 | 83 |
| V 3 | a/Kl | 3,5/16 | 1-2 | 8 | 52 |

Erklärung zu Tabelle 6

1. Lagerfähigkeit (Ergebnis nach 2 Monaten bei 40 °C) ; i. O. = in Ordnung ; a = abgesetzt ; Kl = Aufschwimmen einer Klarlackschicht.
2. Trocknung (gemessen am Drying Recorder) Stundenangaben : klebfrei/durchgetrocknet.
3. Verlauf und Ablaufneigung
   1 : sehr gut bzw. sehr gering
   10 : sehr schlecht bzw. sehr stark
4. Glanz gemessen mit Gonioreflectometer GR-COMP (Fa. Paar, Graz, Österreich) Angabe : % gegenüber Standard.

**Ansprüche**

1. Verfahren zur Herstellung von polyamid- und urethanmodifizierten Alkydharzen, dadurch gekennzeichnet, daß man bei 180-240 °C

57-79,5 Gew.-% eines niedermolekularen Alkydharzvorproduktes, welches einen Anteil an trocknenden Fettsäuren von 55-75 Gew.-%, ein Molverhältnis zwischen Polyol und Dicarbonsäure von über 1,8 : 1, eine Hydroxylzahl von 100-240 mg KOH/g, eine Säurezahl von weniger als 2 mg KOH/g und ein Molekulargewicht (im Zahlenmittel) zwischen ca. 800 und ca. 2 000 aufweist mit

10-20 Gew.-% eines Dimerfettsäurepolyamids umsetzt und das erhaltene Zwischenprodukt bei 80-120 °C in Gegenwart indifferenter Lösungsmittel mit

10-20 Gew.-% eines oder mehrerer Diisocyanate und

0,5-3,0 Gew.-% eines Amins der allgemeinen Formel

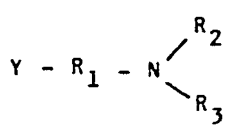

reagiert,
wobei Y für eine Hydroxyl- oder eine primäre oder sekundäre Aminogruppe steht, $R_1$ einen Alkylenrest mit 2-5 C-Atomen und $R_2$ sowie $R_3$ einen Alkylrest mit 1-4 C-Atomen bedeutet, wobei die Menge des Amins so gewählt wird, daß für das Reaktionsprodukt eine Aminzahl zwischen 3 und 15 mg KOH/g

resultiert und mit Maßgabe, daß vor der Zugabe des Amins mindestens 40 %, der Isocyanatgruppen reagiert wurden, aber noch ein ausreichender Überschuß für die Reaktion mit den NH-Gruppen vorhanden ist.

2. Verfahren nach Anspruch 1, dadurch gekennzeichnet, daß Alkanolamine (Y = eine Hydroxylgruppe) vor der Zugabe des Diisocyanats mit dem Zwischenprodukt gemischt werden.

3. Verfahren nach den Ansprüchen 1 und 2, dadurch gekennzeichnet, daß man als Diisocyanate aromatische Diisocyanate einsetzt.

4. Verwendung der nach den Ansprüchen 1 bis 3 hergestellten polyamid- und urethanmodifizierten Alkydharze zur Thixotropierung von langöligen Alkydharzen.

5. Bindemittel für thixotrope Malerlacke gekennzeichnet durch einen Anteil von 5 bis 25 Gew.-% der nach den Ansprüchen 1 bis 3 hergestellten polyamid- und urethanmodifizierten Alkydharze.

**Claims**

1. Process for producing polyamide— and urethane—modified alkyd resins, characterized in that at 180 to 240 °C

57-79,5 % b. w. of a low molecular weight alkyd resin intermediate containing drying fatty acids at a level of from 55 to 75 % b. w., polyols and dicarboxylic acids in a mole ratio of above 1,8 : 1, having a hydroxyl number of 100 to 240 mg KOH/g, an acid number of below 2 mg KOH/g and an average molecular weight of between about 800 and about 2 000, are reacted with

10-20 % b. w. of a dimeric fatty acid polyamide and the obtained intermediate product is reacted, at 80-120 °C, in the presence of inert solvents, with

10-20 % b. w. of one or more diisocyanates and

0.5-3.0 % b. w. of an amine of the general formula

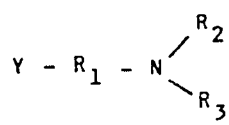

wherein Y is a hydroxy group or a primary or secondary amino group $R_1$ is an alkylene radical with 2-5 C-atoms, $R_2$ and $R_3$ are an alkyl radical with 1 to 4 C-atoms, the quantity of amine being chosen such that the reaction product has an amine number of between 3 and 15 mg KOH/g and under the condition that prior to the addition of the amine, at least 40 % of the isocyanate groups have reacted, a sufficient excess remaining free for the reaction with the NH-groups.

2. Process according to claim 1, characterized in that alkanol amines (Y = a hydroxy group) are mixed with the intermediate product prior to the addition of the diisocyanate.

3. Process according to claims 1 and 2, characterized in that aromatic diisocyanates are used as the diisocyanate.

4. Use of the polyamide- and urethane-modified alkyd resins prepared according to claims 1 to 3 for rendering thixotropic long-oil alkyd resins.

5. Binders for maintenance paints, characterized by the content of 5 to 25 % b. w. of a polyamide- and urethane-modified alkyd resin prepared according to claims 1 to 3.

**Revendications**

1. Procédé pour la fabrication de résines alkydes modifiées par du polyamide et de l'uréthane, caractérisé en ce que l'on fait réagir à une température de 180 à 240 °C

57 à 79,5 % en poids d'un produit de tête de résine alkyde à bas poids moléculaire, qui présente une proportion d'acides gras siccatifs de 55 à 75 % en poids, un rapport molaire entre polyol et acide dicarboxylique supérieur à 1,8 : 1, un indice d'hydroxyle de 100 à 240 mg de KOH/g, un indice d'acide inférieur à 2 mg de KOH/g et un poids moléculaire (en moyenne numérique) entre environ 800 et environ 2 000, avec

10 à 20 % en poids d'un polyamide d'acide gras dimère et en ce que l'on fait réagir le produit intermédiaire obtenu, à une température de 80 à 120 °C, en présence de solvants neutres avec

10 à 20 % en poids d'un ou plusieurs diisocyanates et

0,5 à 3,0 % en poids d'une amine de la formule générale

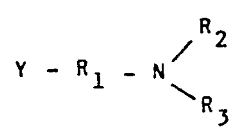

dans laquelle Y représente un groupe hydroxyle ou un groupe amino primaire ou secondaire, $R_1$ signifie un radical alcoylène renfermant de 2 à 5 atomes de C et $R_2$ ainsi que $R_3$ signifient un radical alcoyle renfermant de 1 à 4 atomes de C, la quantité de l'amine étant choisie de telle manière que pour le produit de réaction on obtienne un indice d'amine compris entre 3 et 15 mg de KOH/g, étant entendu qu'avant l'adjonction de l'amine au moins 40 % des groupes isocyanate ont réagi mais qu'une quantité résiduelle suffisante pour la réaction avec les groupes NH est encore présente.

2. Procédé selon la revendication 1, caractérisé en ce que des alcanolamines (Y = un groupe hydroxyle) sont mélangées au produit intermédiaire avant l'adjonction du diisocyanate.

3. Procédé selon les revendications 1 et 2, caractérisé en ce que l'on utilise en tant que diisocyanates des diisocyanates aromatiques.

4. Utilisation des résines alkydes modifiées par du polyamide et de l'uréthane fabriquées selon les revendications 1 à 3 pour rendre thixotropes des résines alkydes à haute teneur en huiles.

5. Liant pour vernis thixotropes, caractérisé par une proportion de 5 à 25 % en poids des résines alkydes modifiées par du polyamide et de l'uréthane fabriquées selon les revendications 1 à 3.